# EUROPEAN PATENT SPECIFICATION

(11) **EP 3 176 933 B1**
(45) Date of publication and mention of the grant of the patent: **26.08.2020**
(21) Application number: 17150670.2
(22) Date of filing: 15.03.2013
(51) Int. Cl.: H02M 1/00, H02J 3/38, H02M 7/49, H02N 10/00, H02M 3/158

(54) **HIGH EFFICIENCY INTERLEAVED SOLAR POWER SUPPLY SYSTEM**
HOCHEFFIZIENTES UND VERSCHACHTELTES SOLARSTROMVERSORGUNGSSYSTEM
SYSTÈME D'ALIMENTATION ÉLECTRIQUE SOLAIRE ENTRELACÉ DE HAUT RENDEMENT

(43) Date of publication of application: 07.06.2017
(62) Divisional of application: 13877614.1
(73) Proprietor: AMPT, LLC, Fort Collins, CO 80525 (US)
(72) Inventor: Ledenev, Anatoli, Fort Collins, CO Colorado 80525 (US)
(74) Representative: Kador & Partner PartG mbB

(56) References cited:
- EP-A1- 0 383 971
- EP-A2- 2 515 424
- TW-A- 201 037 958
- US-A- 4 634 943
- US-A1- 2003 218 449
- US-A1- 2011 210 611
- US-A1- 2012 043 818
- MIWA B A ET AL: "High efficiency power factor correction using interleaving techniques", PROCEEDINGS OF THE ANNUAL APPLIED POWER ELECTRONICS CONFERENCE AND EXHIBITION. (APEC). BOSTON, FEB. 23 - 27, 1992;, vol. CONF. 7, 23 February 1992 (1992-02-23), pages 557-568, XP010056896, NEW YORK, IEEE, US DOI: 10.1109/APEC.1992.228361 ISBN: 978-0-7803-0485-7

## Description

### I. TECHNICAL FIELD

The present invention focuses on the field of providing solar power including but not limited to residential and commercial power systems and arrays. In particular it relates to processes, devices, and circuitry that can provide such power in a more efficient manner. It also can find application in general power systems that have some of the more fundamental attributes of solar power sources with the same effects.

### II. BACKGROUND

The value of solar power for society has been known for many years. It offers clean energy but requires harnessing the energy and feeding it into electrical grid or other load. Efficiency in generation is of particular interest. One aspect that has proven particularly challenging is the ability to harvest the energy efficiently across the entire power spectrum desired. Because the influx of solar energy can vary and because the photovoltaic effect itself can vary, electrical challenges exist that to some degree remain. In addition to the technical issues, regulatory limits such as desirable for safety and the like can also pose challenges. In addition, the combination of photovoltaic sources such as in the strings of panels or the like combines to make efficient harvesting of the energy an issue. As an example, an interesting fact that is frequently under the current technology the most efficient generation of power (likely at the highest voltage after conversion) is a situation where no substantial power is delivered. This seeming paradox is an issue that remains challenging for those in the field. Similarly the desire to generate more and more power such as through larger strings of panels has become an issue due to regulatory limits and the like.

The present invention provides circuits and methods through which many of these challenges can be reduced or even eliminated. It provides designs with unusual efficiency in power generation and provides considerable value to those desiring to utilize solar or other power sources efficiently.

EP 2 515 424 A2 is concerned with a DC-DC converter. The converter has a primary half-bridge which is connected in parallel to a primary terminal and is provided with a series circuit comprising switching elements. A secondary half-bridge is connected in parallel to a secondary terminal and is provided with a series circuit comprising switching elements.

Switching circuits for extracting power from an electric power source is disclosed in US 2012/0043818 A1. Each switching circuit includes an input port electrically coupled to a respective one of an electric power source, an output port, and a first switching device adapted to switch between its conductive and non-conductive states to transfer power from the input port to the output port.

US 2003/0218449 discloses methods and circuitry for combining the outputs of multiphase power converters.

A control device for a switching arrangement with a direct current source feeding a load through a semiconductor rectifier regulator unit having two controllable semiconductor rectifier elements of identical conductance direction as part of the regulator unit is disclosed in US 4,634,943.

Solar power circuits seeking to reduce or eliminate the risk of damage to components of photovoltaic power circuits are disclosed in US 2011/0210611 A1. In certain embodiments, diodes are used to prevent reverse current flow.

EP 0 383 971 relates to a supply circuit for a multi-system locomotive. The supply circuit contains a first and second power converter which are each connected in an electrically conductive manner to a first and second inverter by means of a first and second intermediate circuit capacitor.

Different systems to achieve solar power conversion with circuitry that can be used to harvest maximum power from a solar source or strings of panels for DC or AC use are disclosed in TW 2010037958.

Miwa et. Al in "High Efficiency Power Factor Correction Using Interleaving Techniques", Proceedings of the Annual Applied Power Electronics Conference and Exhibition, Feb. 23-27, 1992, p. 557-568 studies a highly efficient power factor correction converter for computer applications.

### III. DISCLOSURE OF INVENTION

Accordingly, the present invention includes a variety of aspects, circuits, and processes in varied embodiments which may be selected in different combinations to suit differing needs and achieve various goals. It discloses devices and methods to achieve unusually high efficiency solar and other power delivery in a way that is more beneficial to a variety of loads. The embodiments present some initial ways to achieve high efficiency power delivery or generation and show the general understandings which may be adapted and altered to achieve the following and other goals. Of course, further developments and enhancements may be possible within keeping of the teachings of the present invention.

As stated, one of the basic goals of embodiments of the invention is to provide highly efficient solar and other power generation. It can provide efficient power converters and other circuitry which can achieve this goal in multiple ways.

Another goal of embodiments of the invention is to be able to provide enhanced strings of power sources such as may be found in a power array or other solar installation or the like. Yet another goal of embodiments of the invention is to provide better operational efficiency over all power generation regimes. In keeping with this goal, another aspect is to provide higher operational voltage that can be closer to, but not exceeding, the regulatory or other limit across all power generations situations.

Still another goal of embodiments of the invention is to provide lower inductance, low capacitance, and lower energy storage both at the input and output levels. A similar goal is to provide lesser ripple in outputs for electrical circuitry operating on solar and other power sources.

Naturally other goals of the invention are presented throughout the specifications and claims.

### IV. BRIEF DESCRIPTION OF DRAWINGS

Figure 1 is a schematic of circuitry as configured for a phased interleave embodiment of the present invention.
Figures 2a and 2b are timing diagrams to achieve control according to various embodiments of the present invention.
Figure 3 is an efficiency related type of value diagram conceptually comparing several operational modes of the present invention with some traditional systems.
Figure 4 is a schematic of circuitry as configured for a tapped coupled inductor embodiment of a phased interleave design for the present invention.
Figure 5 is a schematic of tapped coupled inductor circuitry as configured for a portion of an additive string voltage embodiment of the present invention.
Figure 6 is a schematic of circuitry as configured for one interpanel configuration embodiment of the present invention.
Figure 7 is a schematic of circuitry as configured for one more phased string example.
Figure 8 is a conceptual diagram of boundary controlled modes of the present invention.

### V. MODE(S) FOR CARRYING OUT THE INVENTION

As mentioned earlier, the present invention includes a variety of aspects, which may be combined in different ways. The following descriptions are provided to list elements and describe some of the embodiments of the present invention. These elements are listed with initial embodiments, however it should be understood that they may be combined in any manner and in any number to create additional variations. The variously described examples and preferred embodiments should not be construed to limit the present invention to only the explicitly described systems, techniques, and applications. Further, this description should be understood to support and encompass descriptions and claims of all the various embodiments, systems, techniques, methods, devices, and applications with any number of the disclosed elements, with each element alone, and also with any and all various permutations and combinations of all elements in this or any subsequent application.

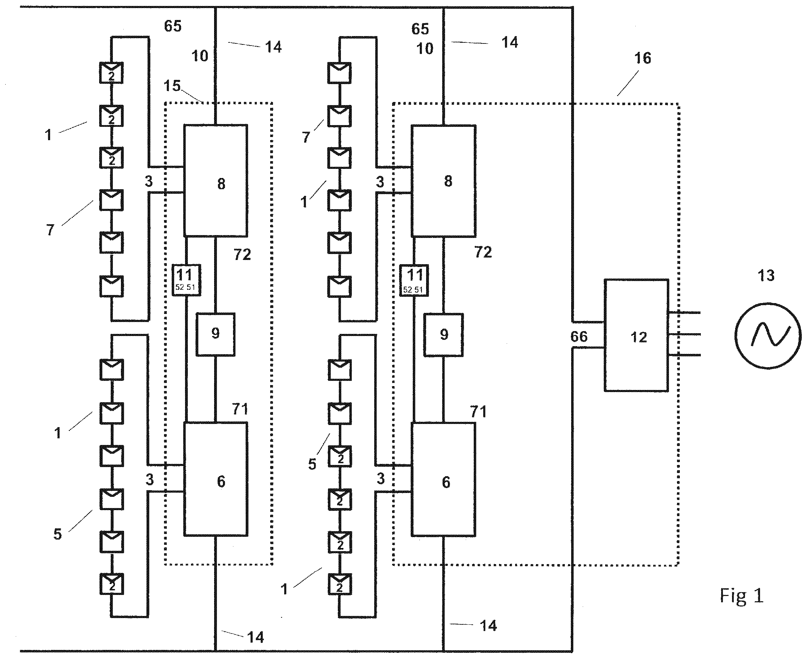

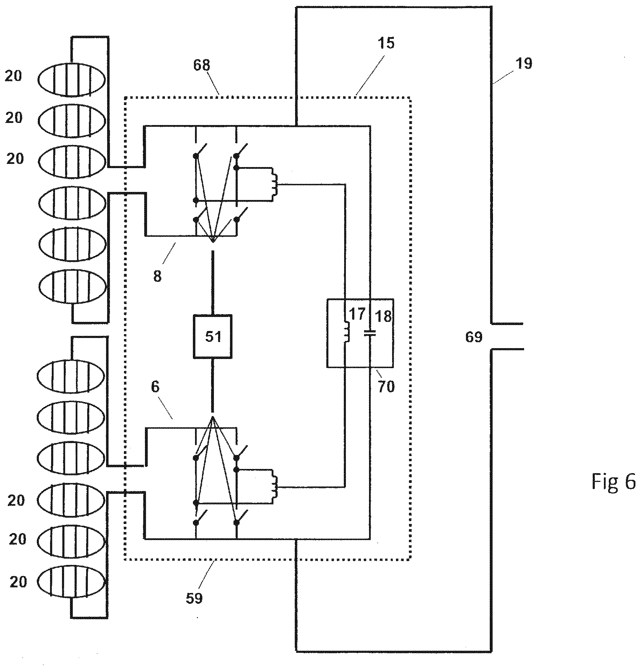

As shown in figure 1, solar power generation can involve accepting one more sources of power (1) such as may be generated by one or more individual photovoltaic sources (2). As is well known, the photovoltaic source can be a solar panel (19)(as shown in figure 6) or even individual solar cells (20)(also as shown in figure 6). In figure 1, the sources (2) can be aggregated to create one conceptual photovoltaic source of power (1). The individual output (3) from one of the photovoltaic sources (2) may be a DC power output. This DC power output (3) can be converted into a modified version of DC power. This may, but need not occur at the module level, such as by a module or other type of converter which is not shown but which could, but need not exist for each panel (19) or each photovoltaic source (2). Such a converter may be configured to operate on or with individual panels or modules and can control power harvesting to achieve individual maximum power point operation as is known.

As mentioned, in an embodiment of the present invention such as shown in figure 1, the output of a collection of solar panels or more generally sources (2) can be aggregated to create one conceptual photovoltaic source of power (1). This, perhaps aggregated, source of power, also a DC power output, and here considered a first photovoltaic source of power (5), may be further handled or converted by a DC-DC photovoltaic converter, perhaps here shown as a base phase DC-DC photovoltaic converter (6) to provide a base phase switched output (71).

Similarly, another aggregated source of power, here considered a second photovoltaic source of power (7), may also be converted by a DC-DC photovoltaic converter, here shown as an altered phase DC-DC photovoltaic converter (8) to provide an altered phase switched output (72). Both the base phase DC-DC photovoltaic converter (6) and the altered phase DC-DC photovoltaic converter (8) can have their outputs combined through combiner circuitry (9), to provide a conversion combined photovoltaic DC output (10). In addition, both the base phase DC-DC photovoltaic converter (6) and the altered phase DC-DC photovoltaic converter (8) can be similarly controlled, such as through a synchronous phase control (11) that synchronously operates switches or the like in the two converters so their operations are switch timing responsive in sync with each other, whether opposing or otherwise. Both the base phase DC-DC photovoltaic converter (6) and the altered phase DC-DC photovoltaic converter (8) can be considered combined as together presenting a low photovoltaic energy storage DC-DC photovoltaic converter (15) which can act on two sources or power (1) and can provide a low photovoltaic energy storage DC output (65). These outputs may be combined to present an array or other enhanced low photovoltaic energy storage DC output (66).

In typical applications, it is common for the conversion combined photovoltaic DC output (10) to be provided as an input to a load, shown as a photovoltaic DC-AC inverter (12) as but one possibility. The photovoltaic DC-AC inverter (12) can provide a photovoltaic AC power output (13). This may be connected to a grid or the like. As also shown, strings of such power can be connected in parallel (14) to provide greater power to the photovoltaic DC-AC inverter (12). It is also possible to provide an integrated system such as by having both the low photovoltaic energy storage DC-DC photovoltaic converter (15) and the photovoltaic DC-AC inverter (12) integrated to present a combined high efficiency DC-DC-AC photovoltaic converter (16).

In operation, the system can accept first power from the first photovoltaic source of power (5), accomplish base phase DC-DC conversion to create a base phase DC power delivery through the base phase DC-DC photovoltaic converter (6). In similar fashion accepted power from a second source of power such as the second photovoltaic source of power (7) can be converted through an altered phase DC-DC converting process to provide and create an altered phase DC power delivery. Both the base phase DC-DC photovoltaic converter (6) and the altered phase DC-DC photovoltaic converter (8) can have switches to achieve their operations. These switches can be controlled by some type of controller perhaps a synchronous phase control (11). The output of the altered phase DC power delivery and the base phase DC power delivery can be combined to achieve the mentioned conversion combined photovoltaic DC output (10).

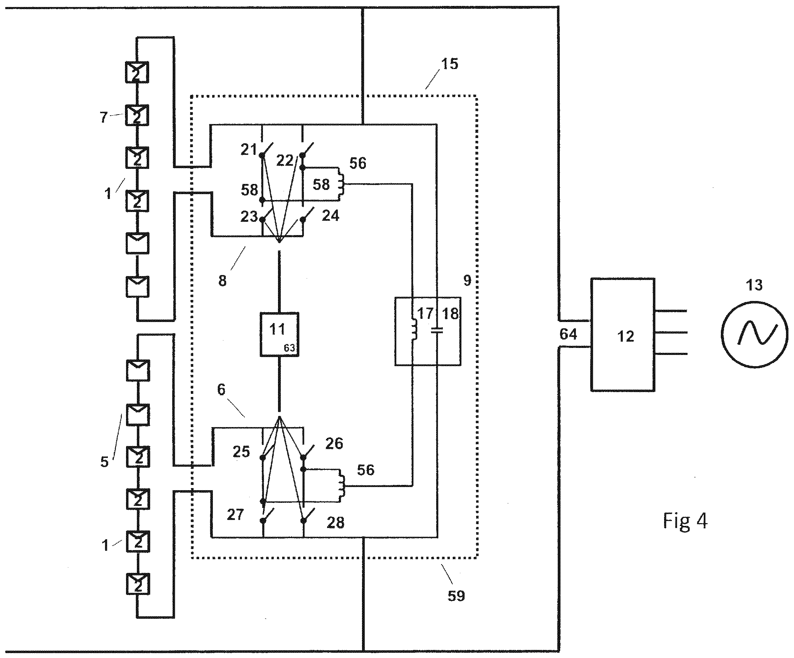

To allow for greater power generation, it is possible that the process of combining the different power deliveries can involve the process of series combining the power deliveries. The combiner circuitry (9) can be configured as series power configured circuitry so that voltage or the like of the two power generators are added. As discussed later in reference to figures 4, 6, and 7, it can be understood that the combiner circuitry (9) can involve one or more of either or both an inductance and/or a capacitance. These elements can be configured to have unusually low energy storage requirements for a photovoltaic system, and so the present invention can achieve unusually low input and output converter energy storage as discussed later. In such a configuration, the circuitry can be considered as involving a low photovoltaic energy storage inductor (17) and/or a low photovoltaic storage capacitor (18) of which the low photovoltaic energy storage DC-DC converter (59) is comprised. When configured as a series power combining circuit, the combiner circuitry (9) can present additive voltage circuitry that adds the output voltage of one power supply such as the base phase switched output to the output voltage of another power supply such as the altered phase switched output. The step of adding voltage can allow greater power generation or delivery efficiency while not exceeding the regulatory limits as mentioned earlier. It can also be achieved by low inductance adding of the voltages through the teachings of the present invention.

As mentioned, the converters can be based on a switch-mode type of operation. Such converters can have a number of different switches through which operations can achieve the desired goals. Varying types of converters are shown in different embodiments of the present invention. As shown in figures 4, 5, 6, and 7, the converters can have switches (e.g., 21-46) that can be controlled to achieve the desired goals. This control can be specific to embodiments of the present invention and can be an important aspect in achieving the goals as desired as well as an important difference in operation as compared to previous similar circuitries. Further, some of the switches such as those labeled (44 & 45 and the like) can be active switches, diodes, or even a combination of diodes with an active switch. The affirmative control of the switches can be by the synchronous phase control (11) as mentioned earlier. As shown in Figure 1, one literal or conceptual synchronous control can activate multiple converters so that their switches are synchronous in operation. Naturally, two or more separate controls with a common timing can be used as long as their clock cycles are common so that the two converters are operated under one timing mode.

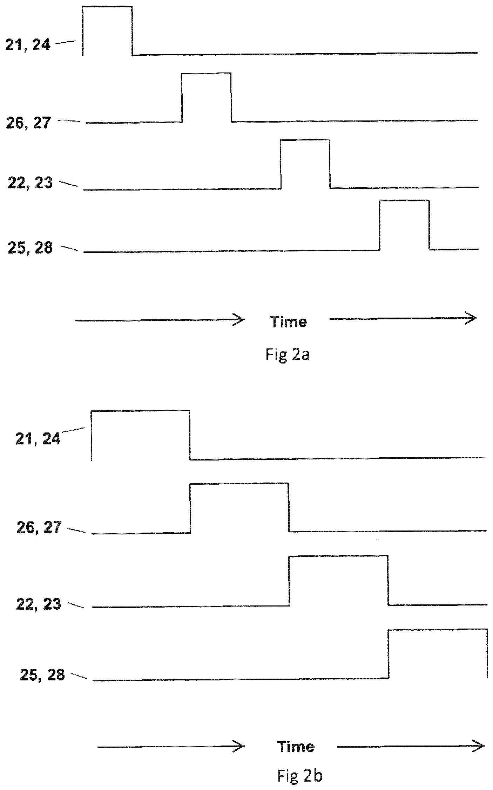

Control can be by duty cycle controlling the switches in the converters. A duty cycle controller (51) can be provided common to both converters as shown, and as such it can be considered a common duty cycle controller to achieve the step of common duty cycle control so that switches in the two converters can be operated synchronously according to desired schedules. By providing a common controller or at least synchronously controlling the converters, embodiments of the invention can be considered as providing a common timing signal for switch operation. This common timing signal can specifically cause modes of operation in accordance with the invention. For example, figures 2a and 2b show some examples of this common timing signal for the tapped magnetically coupled inductor embodiments of the invention such as shown in figure 4. In these figures, a roughly 25% (figure 2b) and 12½% (figure 2a) duty cycle operation is conceptually presented showing the operation of switches (21-28) as indicated. Although not shown, operation from 0% to 100% is possible, of course. As may be understood in the context of comparing the operations of switches (21 & 24), switches (26 & 27), switches (22 & 23), and switches (25 & 28) the synchronous and opposing modes of control can be seen. These switches can be sequentially operated so that the outputs of each converter oppose each other and switched at different times. As may be appreciated from figure 2b, this can offer advantages such that the opposing modes of operation can compensate for and offset an effect of each other in the combiner circuitry (9) and thus allow lower energy storage and more efficient operation. By presenting an opposing phase controller (52), embodiments of the invention can be configured such that one converter is on, generating power, active or the like when another is off or the like and vice versa. Through such affirmative control of switches, opposing phase controlling of the step of converting the power can achieve the reductions in energy storage as well as reduced ripple and other advantages. This opposing phase controller (52) can be diametrically opposing such as by providing a 180° photovoltaic converter switch controller and 180° photovoltaic converter switch controlling the DC output or the converters as shown. In this fashion the converter components can deliver power according to an interleaved schedule or process to effect advantages mentioned.

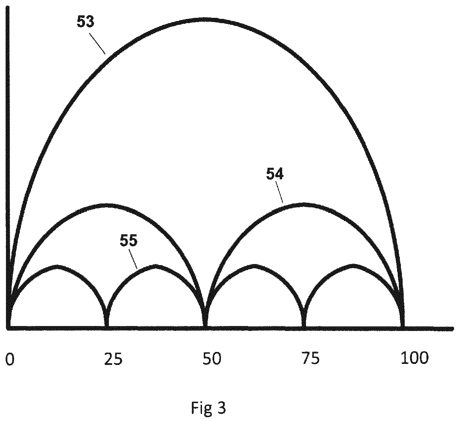

Similarly, by the interleave design, advantages can also be achieved. This can the understood conceptually with reference to figure 3 with the bottom axis representing the percentage of duty cycle operation. Perhaps non-quantitatively, figure 3 can be understood as representing an efficiency type of value across the duty cycles ranges. It also compares one traditional operation with some of the improved modes of operation. In the previous systems, converters may have presented efficiency (or more appropriately inefficiency) across a 0% to 100% duty cycle range as shown conceptually in figure 3 by the curve labeled (53). By understanding that for some values and in some instances the figure 3 conceptual plot can be considered as presenting inefficiency or even a conversion energy along a vertical axis, it can be seen that significant inefficiency exists for many traditional systems at anything other than the 0% and 100% duty cycle areas. From this, it can be conceptually understood that in many traditional operating modes (designs with a full duty cycle energy configuration), converters were often least efficient at a midpoint of operation. They were most efficient at the 0% duty cycle of operation (no power) and also at the 100% duty cycle mode of operations (no conversion) but these can be less significant from a conversion perspective. Thus as those skilled in the art well understood, during the most significant situations of power generation or at least delivery, such as in the 50% to 100% duty cycle range of operation - often the most common locations -- the converter was on average not that efficient. For example, for a maximum 60 volt panel output, a more traditional, full cycle ripple energy converter could provide an output ranging from 0 to 60 volts. At 0% duty cycle (0 volts), there was no power delivered; at 50% duty cycle there was power but at worst efficiency; at 100% there was no conversion achieved. Embodiments of the present invention show that this mode of operation can be improved upon. As explained later, entire efficiency is enhanced by the phased modes of operation now available through the present invention.

With respect to the curve labeled as (54), one can understand that this particular mode shows operation of embodiments designed to achieve a half duty cycle energy configuration. As may be conceptually understood from this plot, the efficiency can be improved (inefficiency reduced) through embodiments of the present invention. Similarly in the curve labeled (55), an operation mode using a half duty cycle energy configuration with or without the phased operational mode can be understood. As shown, even further advantages can be achieved (this may not be available for some of the embodiments of the present invention). Even the aspect of varying the voltage across all operational regimes is changed for embodiments of the present invention. Output voltage does not vary in this manner for the present invention, it remains relatively constant and so a high delivery voltage (itself a more efficient way to deliver power) can be achieved.

Figure 3 can be considered as indicating amount of ripple such as through the low photovoltaic storage energy inductor (17) or the like, ripple current storage energy, and even the sweet spot character across the various duty cycles. The number of sweet spots available in operation, with substantial power delivery, for the high efficiency conversion operations according to the present invention is improved. Sweet spots (highest practical efficiency and/or relatively little or no inefficiency) can be understood to exist at locations on the plot where it touches the bottom axis. A sweet spot can exist for some traditional circuitry at 0% and 100% of operation. Unfortunately, these are often locations of least interest as they may be less common or at least may not involve substantial power delivery. In embodiments of the present invention, sweet spots can exist at 50% and 100% or even at 25% and 50%. Through such designs and mode of operation, embodiments can thus provide an augmented sweet spot photovoltaic output. These augmented sweet spots can now exist even at substantial power conversion locations of operation and can be an effect caused by the new opposing phase mode of operational control by the synchronous control (11). As shown in figure 3, for embodiments of the present invention, a sweet spot can now exist even at locations where significant power conversion occurs, not just at extremes of operational modes as in many traditional designs. Thus, the invention can provide a converted power generation or delivery sweet spot photovoltaic output as well as an augmented sweet spot photovoltaic output. As is well known, solar panels can have temperature effects; they generate power differently in different temperature conditions, and to a significant extent the variation in duty cycle can be due to this (as well as partial shading, etc.). In fact, the depiction in figure 3 can be considered as indicating a temperature effect with a hot temperature power generation condition more likely at the 100% duty cycle and a cold temperature power generation condition more likely at the 50% duty cycle for maximum power harvesting. For many traditional systems operation at a colder temperature had a mode of relatively lower conversion efficiency. Through embodiments of the invention, high efficiency can exist at such reduced temperature power generation conditions and the invention can thus present a photovoltaically reduced temperature condition sweet spot photovoltaic output. For certain designs, it can even present a cold operational regime sweet spot photovoltaic output. As shown in figure 3, for embodiments of the present invention, a sweet spot can exist at the 50% duty cycle range rather than a poorly efficient level of power delivery, not just a top as in many traditional designs and so the invention can provide a cold operational regime sweet spot photovoltaic power output.

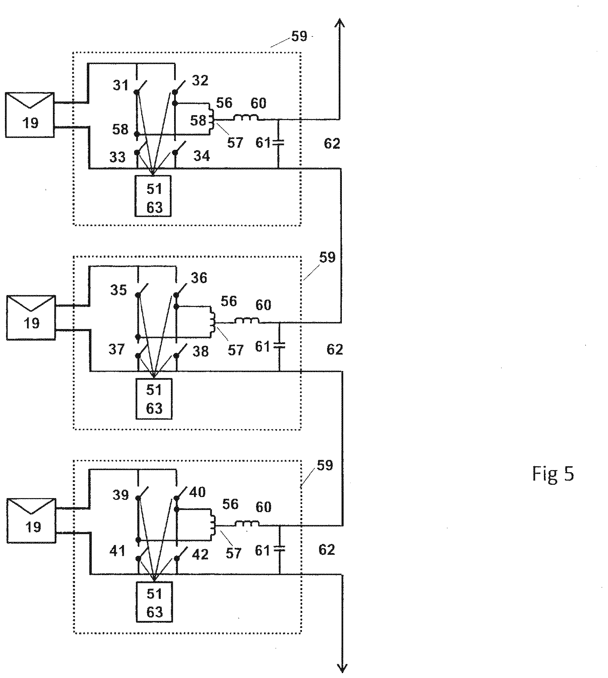

As mentioned above, converters may be affirmatively switched to achieve best modes of operation. A variety of converter topologies are possible and several are shown in the figures. Figure 5 shows a particular type of converter as applied to an individual panel that has a tapped magnetically coupled inductor element (56). This is one example of a tapped magnetically coupled inductor arrangement. As shown the tapped magnetically coupled inductor element (56) has an inductor tap (57). This embodiment is affirmatively switched through switches (31 through 42) for the various converters as shown in figure 5. These switches are activated by a duty cycle controller (51) to which the converter is switch timing responsive. As shown, this converter can include two pairs of series switches (e.g., 31 & 33)(32 & 34) connected at midpoints (58) at which the tapped magnetically coupled inductor element (56) is connected.

Each low photovoltaic energy storage DC-DC photovoltaic converter (59) can include its own low photovoltaic energy storage inductor (60) and low energy storage output capacitor (61) so as to provide a low photovoltaic inductance DC output (62). Figure 5 shows multiple applications of the tapped magnetically coupled inductor arrangements whereby each converts its own power output, perhaps such as from a solar panel (19). These converted, high efficiency photovoltaic outputs (62) may be series combined as shown to present an output string. Only a portion of a typical string is depicted. Often numerous panels are combined to approach the maximum allowed operating voltage. In this embodiment, however, an excess voltage arrangement can be configured. By using a half duty cycle energy configuration and individual power source conversion as shown, the string can be configured to provide a double maximum voltage arrangement such that a maximum regulatory or other allowed output can be one-half of the theoretically available panel voltage output. To stay under the maximum amount, the output can be boundary limited by including a photovoltaic boundary output controller (63) which may be part of each individual duty cycle controller, as depicted, or which may be conceptually a collective control for all converters in the string. For configurations applying a quarter duty cycle energy configuration and the individual power source conversion as shown, the string can even be configured to provide a quadruple maximum voltage arrangement such that a maximum regulatory or other allowed output can be one-quarter of the theoretically available panel voltage output. Additional duty cycle energy options (one-eighth, one-tenth, etc.) are also possible, of course. Again, a photovoltaic boundary output controller (63) can be included. Importantly, even with this boundary limitation, power is still harvested efficiently. Embodiments of the invention can be extremely efficient as compared to traditional designs. In fact, the invention can present a photovoltaic output that is at least about 98%, 99%, and 99.5% efficient from the perspective of its conversion process across a duty cycle range (averaged across the range of operation, an occurrence-based range of delivery, or a range of typical expected operation). It can even approach only wire losses in delivering power. Traditional designs rarely can achieve this level of efficiency.

For embodiments utilizing phased operational modes, interconnection and operation such as shown in figure 4 can be achieved. In this embodiment, the two pairs of series switches (e.g., 21 & 23)(22 & 24) connected at midpoints (58), can have the output from the tapped magnetically coupled inductor element (56) combined such as through the low photovoltaic energy storage inductor (17) so as to provide a low photovoltaic inductance DC output (64), and also a low energy storage output capacitor (18) to present another type of low photovoltaic energy storage DC-DC photovoltaic converter (59). In similar fashion to that of the individual panel conversion design of figure 5, the arrangement of figure 4 can also have an excess voltage arrangement. Such configurations can be of a half duty cycle energy configuration and so a half duty cycle controller can be used with the converted string configured to provide a double maximum voltage arrangement. In this configuration, again, to stay under the maximum amount, the output can be boundary limited by including a photovoltaic boundary output controller (63).

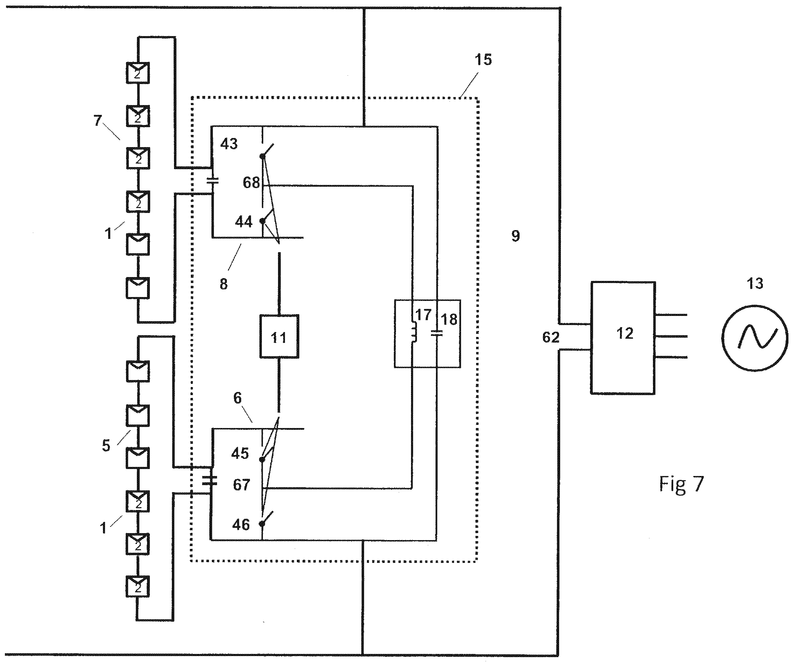

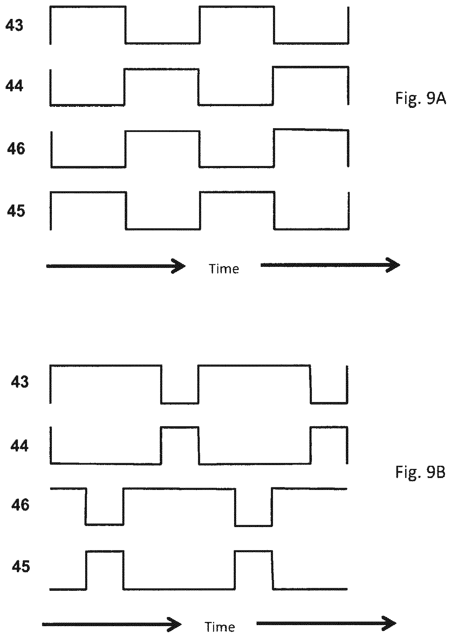

Embodiments such as the phased converter shown in figure 4 can also be achieved through a buck power converter appearing arrangement such as shown in figure 7. In this example circuitry resembling two buck DC-DC power converters can be used to create one high efficiency converter such as the low photovoltaic energy storage DC-DC photovoltaic converter (15) shown. In this example two pairs of series switches (43 & 44)(45 & 46) connected at midpoints (67) can have the output from the switched element combined such as through the low photovoltaic energy storage inductor (17) so as to provide a low photovoltaic inductance DC output (62), and also a low energy storage output capacitor (18) to present the low photovoltaic energy storage DC-DC photovoltaic converter (15). Figures 9a and 9b show some examples of this common timing signal for this example. In these figures, a roughly 50% (figure 9a) and 75% (figure 9b) duty cycle operation is conceptually presented showing the operation of switches (43-46) as indicated. Again, although not shown, operation from 0% to 100% is possible, of course. As may be understood in the context of comparing the operations of switches (43 & 44) and switches (46 & 45), the synchronous and opposing modes of control can be seen. These switches can be sequentially operated so that the outputs of each converter oppose each other and are switched at different times. As with figures 2a and 2b, this also offer advantages such that the opposing modes of operation can compensate for and offset an effect of each other in the combiner circuitry (9) and thus allow lower energy storage and more efficient operation.

As mentioned earlier, embodiments of the invention can operate at high operational voltages. Whereas in most, more traditional systems, output efficiency varied across the operational regime as shown in the curve (53) in figure 3, in embodiments of the present invention, the output can be relatively stable. As also indicated conceptually in figure 3 when considering the vertical axis as a type of ripple indication, mainly just the ripple varies - and even this is at a lower level of ripple than previous. The output voltage can be controlled to be relatively constant across all operational regimes without any compromise in power delivery. In fact, not only is there no loss in power delivery, the present invention can achieve higher power delivery. By utilizing a phased operational mode, this power output voltage such as present at the enhanced low photovoltaic energy storage DC output (66)(for the embodiment in figure 1), low photovoltaic inductance DC output (64)(for the embodiment in figure 4), and high efficiency photovoltaic outputs (62)(for the embodiment in figure 5 and the example in figure 7) can be a high multi operational

regime output such that it is, at least in a photovoltaic sense, at a relatively high voltage or the like in any or even across all operational conversion regimes where substantial power is delivered. The high multi operational regime output can even be a high average photovoltaic voltage output (averaged across the range of operation, an occurrence-based range of delivery, or a range of typical expected operation). This high average photovoltaic voltage output or high multi operational regime output can be controlled to be near or even at the maximum desired or allowable for enhanced efficiency, perhaps less some guard band tolerance. Thus, embodiments can be configured or controlled to achieve an at least about 80%, 90%, or even 95% or more of a maximum voltage photovoltaic output across a typical operational range.

Beyond merely the level of voltage, embodiments can also present particular levels of high efficiency such as at sweet spots or the like. Considering the diagram of figure 3 as conceptually depicting temperature effect with a hot temperature generation at or near the 100% duty cycle and cold temperature operation at or near the 50% duty cycle, it can be understood that most significant, nominal operation will often occur in the 50% to 100% range. As discussed above with respect to the sweet spots shown conceptually in figure 3, designs can present dual nominal operational range high efficiency photovoltaic power outputs where sweet spot operation exists at two substantial power delivery locations. This is shown conceptually in figure 3 at 50% & 100% for the embodiments characterized as the half duty cycle energy configuration embodiments, and at 50%, 75%, and 100% for the embodiments characterized as the quarter duty cycle energy embodiments. Similarly, embodiments can be considered as presenting at least one high efficiency converted power generation or delivery mode photovoltaic output such as those referenced above and may even provide a two or dual high efficiency spots at which power conversion or delivery occurs.

In providing a low inductance output or low energy storage conversion, both the energy storage experienced at an input and at an output can be unusually low, at least from a photovoltaic perspective. Input inductance can be particularly low for the module level converter designs. This can be significant and can benefit the applied load perhaps such as the photovoltaic DC-AC inverter (12). Through proper coordination, this can offer advantages and can even encourage the use of the integrated design such as the combined high efficiency DC-DC-AC photovoltaic converter (16) design shown in figure 1.

As previously mentioned, a low energy storage converter, perhaps comprising a low energy storage, a low energy inductance, and/or a low energy capacitance, are advantages of the present invention. Recalling that figure 3 can be viewed as conceptually indicating the amount of ripple current storage energy across the duty cycle range, it can be understood that the amount of storage energy is significantly reduced through embodiments of the present invention. Whereas traditional systems indicate significant energy storage needs equivalent to a full cycle of ripple energy (as suggested by the peak height of curve (53) at 50%), in embodiments of the present invention, this energy can be considerably reduced by half or even a quarter as shown. Specifically, for a 50% to 100% design shown by curve (54), the peak height at 25% and 75% is about one-half the amount of energy storage indicated for a traditional system with equivalent switching frequency, equivalent types of switches, and the like. Similarly, for a 25% to 50% design shown by curve (55), the peak height at about 12½%, 37½%, etc. is about one-quarter the amount of energy storage indicated for a traditional system. The reduced values of conversion energy storage, inductance, and capacitance can be achieved at these reduced levels. Thus, for the embodiments characterized as the half duty cycle energy configuration embodiments, such designs can have a not more than about one-half duty cycle range ripple current photovoltaic energy storage converter, a not more than about one-half of traditional photovoltaic energy storage converter, a not more than about one-half duty cycle range ripple current photovoltaic energy storage inductor, a not more than about one-half of traditional photovoltaic energy storage inductor, a not more than about one-half duty cycle range ripple current photovoltaic energy storage capacitor, and a not more than about one-half of traditional photovoltaic energy storage capacitor. Similarly, for the embodiments characterized as the quarter duty cycle energy configuration embodiments, such designs can have a not more than about one-quarter duty cycle range ripple current photovoltaic energy storage converter, a not more than about one-quarter of traditional photovoltaic energy storage converter, a not more than about one-quarter duty cycle range ripple current photovoltaic energy storage inductor, a not more than about one-quarter of traditional photovoltaic energy storage inductor, a not more than about one-quarter duty cycle range ripple current photovoltaic energy storage capacitor, and a not more than about one-quarter of traditional photovoltaic energy storage capacitor. Similar aspects can exist for other embodiments (one-eighth, one-tenth, etc.) This can allow greater power delivery to the load such as the photovoltaic DC-AC inverter (12) or the like.

A further embodiment of the invention is illustrated in figure 6. In this design, an individual panel (19) can be enhanced by providing an interpanel or other conversion design that may be integral to, attached to, or provided with the panel (19). In this embodiment, multiple photovoltaic power cells (20) can be aggregated perhaps conceptually to present a solar panel (19) perhaps in its own assembly. The solar panel (19) power delivery can be conceptually split at some point and so there can be at least one split panel DC-DC photovoltaic converter (68). As discussed above, this can actually be comprised of two converters, perhaps such as a base phase DC-DC photovoltaic converter (6) and the altered phase DC-DC photovoltaic converter (8). These converters can have their outputs combined through combiner circuitry to provide a conversion combined photovoltaic DC output and this type of combiner circuitry can be configured as an interpanel photovoltaic cell addition circuitry (70).

The split panel DC-DC photovoltaic converter (68) can have affirmative switches as shown, that may be controlled by an internal or external duty cycle controller (51) to provide a high efficiency (or low energy storage or low inductance) photovoltaic DC output (69). Again this can be configured as to have a tapped magnetically coupled inductor arrangement or a buck converter appearing arrangement. Each can include a low photovoltaic energy storage inductor (17), a low photovoltaic inductance DC output, and a low energy storage output capacitor (18) as discussed above. This type of low photovoltaic energy storage DC-DC photovoltaic converter (59) can achieve the advantages discussed above. It may or may not require a photovoltaic boundary output controller.

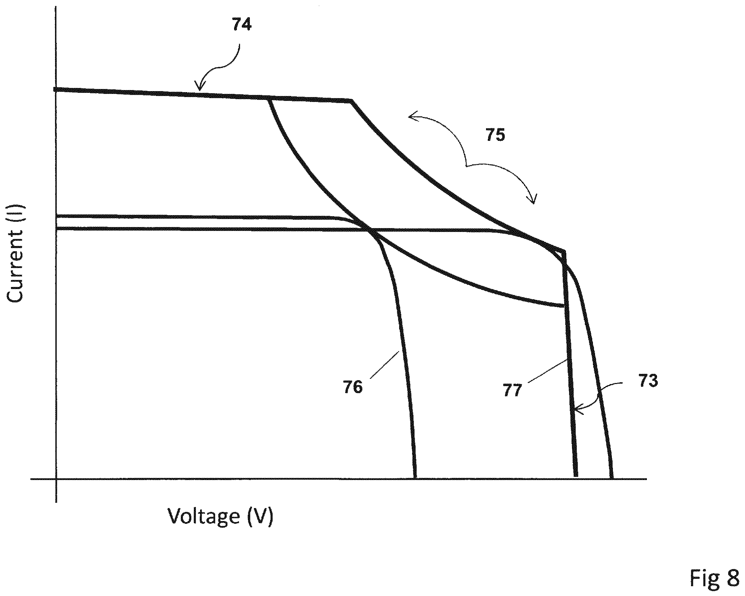

As shown in figure 8, for those embodiments of any of the above that include a photovoltaic boundary output controller (63), it may be understood that this controller can control voltage (73), current (74), maximum power point (75), power delivery (perhaps even by over voltage boundary control to regulate the output power), or other aspects that may need to be limited such as to meet regulatory concerns or the like. This may, of course, exist for high temperature operation (76) or low temperature operation (77). Voltage control can be the most important for regulatory and other reasons, and so embodiments can present some controller as a photovoltaic output voltage limit controller. The photovoltaic boundary output controller (63) can limit output at a boundary hierarchally, that is with an ordered decisional process as to which limit applies and overrides other limits as well. This control can also be optimized for the inverter, inverter input sweet spot control, or otherwise. Some such levels are shown in figure 8. Inverter optimization control can be provided as one way of achieving converter operation that is optimized for a load, perhaps such as a photovoltaic DC-AC inverter (12). As such, embodiments may include (again, separately or as part of an existing controller or control software) a photovoltaic inverter optimized converter controller.

As mentioned above, the above converter and other inventive designs can be applied to a wide range of power situations. Almost any varying source of power can be enhanced by such power conversion and control. These powers can be consumer power, industrial power, individual consumer or such device or battery power, and even large scale grid power sources, and all such applications should be understood as encompassed within the present application and disclosure. As can be easily understood from the foregoing, the basic concepts of the present invention may be embodied in a variety of ways. It involves both conversion techniques as well as devices to accomplish the appropriate conversion. In this application, the conversion techniques are disclosed as part of the results shown to be achieved by the various devices described and as steps which are inherent to utilization. They are simply the natural result of utilizing the devices as intended and described. In addition, while some devices are disclosed, it should be understood that these not only accomplish certain methods but also can be varied in a number of ways. Importantly, as to all of the foregoing, all of these facets should be understood to be encompassed by this disclosure.

The discussion included in this application is intended to serve as a basic description. The reader should be aware that the specific discussion may not explicitly describe all embodiments possible; many alternatives are implicit. It also may not fully explain the generic nature of the invention and may not explicitly show how each feature or element can actually be representative of a broader function or of a great variety of alternative or equivalent elements. Again, these are implicitly included in this disclosure. Where the invention is described in device-oriented terminology, each element of the device implicitly performs a function. Apparatus claims may not only be included for the device described, but also method or process claims may be included to address the functions the invention and each element performs. Neither the description nor the terminology is intended to limit the scope of the claims that will be included in any subsequent patent application.

It should also be understood that a variety of changes may be made without departing from the essence of the invention. Such changes are also implicitly included in the description. They still fall within the scope of this invention. A broad disclosure encompassing the explicit embodiment(s) shown, the great variety of implicit alternative embodiments, and the broad methods or processes and the like are encompassed by this disclosure and may be relied upon when drafting the claims for any subsequent patent application. It should be understood that such language changes and broader or more detailed claiming may be accomplished at a later date (such as by any required deadline) or in the event the applicant subsequently seeks a patent filing based on this filing. With this understanding, the reader should be aware that this disclosure is to be understood to support any subsequently filed patent application that may seek examination of as broad a base of claims as deemed within the applicant's right and may be designed to yield a patent covering numerous aspects of the invention both independently and as an overall system.

Further, each of the various elements of the invention and claims may also be achieved in a variety of manners. Additionally, when used or implied, an element is to be understood as encompassing individual as well as plural structures that may or may not be physically connected. This disclosure should be understood to encompass each such variation, be it a variation of an embodiment of any apparatus embodiment, a method or process embodiment, or even merely a variation of any element of these. Particularly, it should be understood that as the disclosure relates to elements of the invention, the words for each element may be expressed by equivalent apparatus terms or method terms -- even if only the function or result is the same. Such equivalent, broader, or even more generic terms should be considered to be encompassed in the description of each element or action, Such terms can be substituted where desired to make explicit the implicitly broad coverage to which this invention is entitled. As but one example, it should be understood that all actions may be expressed as a means for taking that action or as an element which causes that action. Similarly, each physical element disclosed should be understood to encompass a disclosure of the action which that physical element facilitates. Regarding this last aspect, as but one example, the disclosure of a "converter" should be understood to encompass disclosure of the act of "converting" -- whether explicitly discussed or not -- and, conversely, were there effectively disclosure of the act of "converting", such a disclosure should be understood to encompass disclosure of a "converting" and even a "means for converting." Such changes and alternative terms are to be understood to be explicitly included in the description. Further, each such means (whether explicitly so described or not) should be understood as encompassing all elements that can perform the given function, and all descriptions of elements that perform a described function should be understood as a nonlimiting example of means for performing that function.

### REFERENCES

**U.S.PA TENTS**

| Patent Number | Kind Code | Issue Date | Name of Patentee or Applicant of cited Document |
|---|---|---|---|
| 6696823 | | 2004-02-24 | IKOR ACQUISITION CORP |

**U.S.PATENT APPLICATION PUBLICATIONS**

| Publication Number | Kind Code | Publication Date | Name of Patentee or Applicant of cited Document |
|---|---|---|---|
| 20120223584 | A1 | 2012/09/06 | AMPT, LLC |
| 20120032515 | A1 | 2012-02-09 | AMPT, LLC |

**FOREIGN PATENT DOCUMENTS**

| Foreign Document Number | Country Code | Kind Code | Publication Date | Name of Patentee or Applicant of cited Document |
|---|---|---|---|---|
| WO 02/17469 | WO | A1 | 2002-02-28 | IKOR ACQUISITION CORP |
| 2009/051853 | WO | A1 | 2009-04-23 | AMPT, LLC |

## Claims

1. A method of highly efficiently delivering solar energy power comprising the steps of:
- accepting a first power from a first photovoltaic source of power (5) by a DC input port of a base phase photovoltaic DC-DC converter (6);
- base phase DC-DC converting (6) said first power (5) by utilizing a first tapped magnetically coupled inductor (56) with a first inductor tap (57) to output a base phase DC power delivery (71) connected to said first inductor tap (57) wherein both inputs of said first tapped magnetically coupled inductor (56) are connected to both respective midpoints (58) of said base phase photovoltaic DC-DC converter (6);
- accepting a second power from a second photovoltaic source of power (7) by a DC input port of an altered phase photovoltaic DC-DC converter (8);
- altered phase DC-DC converting (8) said second power by utilizing a second tapped magnetically coupled inductor (56) with a second inductor tap (57) to output an altered phase DC power delivery (72) connected to said second inductor tap (57), wherein both inputs of said second tapped magnetically coupled inductor (56) are connected to both respective midpoints (58) of said altered phase photovoltaic DC-DC converter (8);
- synchronous phase controlling (11) said step of base phase DC-DC converting said first power with said step of altered phase DC-DC converting said second power;
- low storage inductance series power combining (9) said base phase DC power delivery (71) with said altered phase DC power delivery (72) through additive voltage circuitry that includes a low inductance storage series combination inductor (17) connected between said first and second inductor taps to add an output voltage of said base phase DC power delivery to an output voltage of said altered phase DC power delivery with a low energy storage output capacitor (18) to provide a conversion combined photovoltaic DC output (10) at a maximum power point (75); and
- photovoltaic boundary output controlling (63) said step of base phase DC-DC converting said first power and said step of altered phase DC-DC converting said second power for a maximum voltage (73) that overrides said maximum power point (75) or for a maximum current (74) that overrides said maximum power point at at least some times of operation.

2. A method of highly efficiently delivering solar energy power as described in claim 1 wherein said step of low storage inductance series power combining (9) said base phase DC power delivery (71) with said altered phase DC power delivery (72) comprises the step of adding said voltages through additive voltage circuitry that includes a not more than about one half duty cycle range ripple current photovoltaic energy storage inductor.

3. A method of highly efficiently delivering solar energy power as described in claim 2 wherein said step of low storage inductance series power combining (9) said base phase DC power delivery (71) with said altered phase DC power delivery (72) comprises the step of adding said voltages through a not more than about one quarter duty cycle range ripple current photovoltaic energy storage inductor.

4. A method of highly efficiently delivering solar energy power as described in claim 1 wherein said step of synchronous phase controlling (11) comprises the step of synchronously duty cycle controlling.

5. A method of highly efficiently delivering solar energy power as described in claim 4 wherein said step of synchronously duty cycle controlling comprises the step of common duty cycle controlling.

6. A method of highly efficiently delivering solar energy power as described in claim 4 and further comprising the steps of:
- establishing said conversion combined photovoltaic DC output (10) as a converted DC photovoltaic input to a photovoltaic DC-AC inverter; and
- inverting said converted DC photovoltaic input into a photovoltaic AC power output.

7. A method of highly efficiently delivering solar energy power as described in claim 1 wherein said step of synchronous phase controlling (11) comprises the step of common timing signal controlling.

8. A method of highly efficiently delivering solar energy power as described in claim 1 wherein said step of synchronous phase controlling (11) comprises the step of opposing phase controlling.

9. A method of highly efficiently delivering solar energy power as described in claim 1 wherein said step of photovoltaic boundary output controlling said base phase further comprises the step of temperature limit controlling.

10. A method of highly efficiently delivering solar energy power as described in claim 1 wherein said inductor between said first and second inductor taps (57) comprises a low photovoltaic energy storage inductor (17).

11. A method of highly efficiently delivering solar energy power as described in claim 1 wherein said step of low storage inductance, series power combining said base phase DC power delivery (6) with said altered phase DC power delivery (8) comprises the step of establishing a double maximum voltage arrangement.

12. A high efficiency solar energy power system comprising:
- a first photovoltaic source of power (5);
- a base phase DC-DC photovoltaic converter (6) connected with its input port to said first photovoltaic source of power (5) and that establishes a base phase DC power delivery (71), said base phase DC-DC photovoltaic converter (6) comprising a first tapped magnetically coupled inductor (56) with a first inductor tap (57), wherein both inputs of said first tapped magnetically coupled inductor (56) are connected to both respective midpoints (58) of said base phase photovoltaic DC-DC converter (6);
- a second photovoltaic source of power (7);
- an altered phase DC-DC photovoltaic converter (8) connected with its input ports to said second photovoltaic source of power (7) and that establishes an altered phase DC power delivery (72), said altered phase DC-DC photovoltaic converter (8) comprising a second tapped magnetically coupled inductor (56) with a second inductor tap (57), wherein both inputs of said second tapped magnetically coupled inductor (56) are connected to both respective midpoints (58) of said altered phase photovoltaic DC-DC converter (8);
- a synchronous phase control circuitry (11) to which said base phase DC power delivery (71) and said altered phase DC power delivery (72) are switch timing responsive;
- low stored energy inductance series power additive combiner circuitry (9) connecting said base phase DC power delivery (71) and said altered phase DC power delivery (72), and comprising a low inductance storage series combination inductor (17) connected between said inductor taps (57) to add an output voltage of said base phase DC power delivery with an output voltage of said altered phase DC power delivery to provide a conversion combined photovoltaic DC output (10); and
- a photovoltaic boundary output controller (63) to which said converters are responsive at at least some times of operation.

13. A high efficiency solar energy power system as described in claim 12 wherein said low stored energy inductance series combination inductor (17) comprises a not more than about one half duty cycle range ripple current photovoltaic energy storage inductor.

14. A high efficiency solar energy power system as described in claim 12 wherein said low stored energy inductance series combination inductor (17) comprises a not more than about one quarter duty cycle range ripple current photovoltaic energy storage inductor.

15. A high efficiency solar energy power system as described in claim 12 wherein said synchronous phase control circuitry (11) comprises a common duty cycle controller to which said base phase DC-DC photovoltaic converter and said altered phase DC-DC photovoltaic converter are each responsive.

16. A high efficiency solar energy power system as described in claim 12 wherein said synchronous phase control circuitry (11) comprises opposing phase control circuitry.

17. A high efficiency solar energy power system as described in claim 16 wherein said base phase DC-DC photovoltaic converter and said altered phase DC-DC photovoltaic converter each comprise a buck switching circuitry.

18. A high efficiency solar energy power system as described in claim 12 wherein said photovoltaic boundary output controller (63) comprises a base phase photovoltaic boundary output controller to which said base phase DC-DC photovoltaic converter is responsive at at least some times of operation and an altered phase photovoltaic boundary output controller to which said altered phase DC-DC photovoltaic converter is responsive at at least some times of operation.

19. A high efficiency solar energy power system as described in claim 12 wherein said conversion combined photovoltaic output (10) is provided at maximum power point (75) when said maximum power point is not overridden by said photovoltaic boundary output controller (63).

20. A high efficiency solar energy power system as described in claim 19 wherein said photovoltaic boundary output controller (63) controls for a maximum voltage (73) that overrides said maximum power point or for a maximum current (74) that overrides said maximum power point at at least some times of operation.

21. A high efficiency solar energy power system as described in claim 19 wherein said photovoltaic boundary output controller (63) controls for a temperature limit.

## Patentansprüche

1. Verfahren zur hocheffizienten Abgabe von Solarenergieleistung, das die folgenden Schritte umfasst:
- Aufnehmen einer ersten Leistung von einer ersten photovoltaischen Leistungsquelle (5) durch einen DC-Eingangsanschluss eines Basisphasen-DC/DC-Photovoltaikwandlers (6);
- Basisphasen-DC/DC-Wandeln (6) der ersten Leistung (5) unter Verwendung einer ersten magnetisch gekoppelten Induktivität (56) mit Abgriff mit einem ersten Induktivitätsabgriff (57), um eine Basisphasen-DC-Leistungsabgabe (71) auszugeben, die mit dem ersten Induktivitätsabgriff (57) verbunden ist, wobei beide Eingänge der ersten magnetisch gekoppelten Induktivität (56) mit Abgriff mit beiden jeweiligen Mittelpunkten (58) des Basisphasen-DC/DC-Photovoltaikwandlers (6) verbunden sind;
- Aufnehmen einer zweiten Leistung von einer zweiten photovoltaischen Leistungsquelle (7) durch einen DC-Eingangsanschluss eines phasenveränderten DC/DC-Photovoltaikwandlers (8);
- mit geänderter Phase DC/DC-Wandeln (8) der zweiten Leistung unter Verwendung einer zweiten magnetisch gekoppelten Induktivität (56) mit Abgriff mit einem zweiten Induktivitätsabgriff (57), um eine DC-Leistungsabgabe (72) mit geänderter Phase auszugeben, die mit dem zweiten Induktivitätsabgriff (57) verbunden ist, wobei beide Eingänge der zweiten magnetisch gekoppelten Induktivität (56) mit Abgriff mit geänderter Phase mit beiden jeweiligen Mittelpunkten (58) des DC/DC-Photovoltaikwandlers (8) mit geänderter Phase verbunden sind;
- synchrone Phasensteuerung (11) des Schrittes des Basisphasen-DC/DC-Wandelns der ersten Leistung mit dem Schritt des phasenveränderten DC/DC-Wandelns der zweiten Leistung;
- Kombinieren (9), in Serienleistung mit niedriger Speicherinduktivität, der Basisphasen-DC-Leistungsabgabe (71) mit der phasenveränderten DC-Leistungsabgabe (72) durch eine additive Spannungsschaltung, die eine Speicher-Serienkombinations-Induktivität (17) mit niedriger Induktivität enthält, die zwischen den ersten und zweiten Induktivitätsabgriff geschaltet ist, um eine Ausgangsspannung der Basisphasen-DC-Leistungsabgabe zu einer Ausgangsspannung der phasenveränderten DC-Leistungsabgabe mit einem Ausgangskondensator (18) mit niedriger Speicherinduktivität zu addieren, um einen wandlungskombinierten photovoltaischen DC-Ausgang (10) bei einem Punkt (75) maximaler Leistung bereitzustellen; und
- Steuern (63) des photovoltaischen Grenzflächenausgangssignals, wobei der Schritt des Basisphasen-DC/DC-Wandelns der ersten Leistung und der Schritt des phasenveränderten DC/DC-Wandelns der zweiten Leistung für eine maximale Spannung (73), die den Punkt (75) der maximalen Leistung übersteuert, oder für eine maximale Stromstärke (74), die den Punkt der maximalen Leistung zumindest zu einigen Betätigungszeiten übersteuert, erfolgt.

2. Verfahren zur hocheffizienten Abgabe von Solarenergieleistung nach Anspruch 1, wobei der Schritt des Kombinierens (9), in Serienleistung mit niedriger Speicherinduktivität, der Basisphasen-DC-Leistungsabgabe (71) mit der phasenveränderten DC-Leistungsabgabe (72) den Schritt des Addierens der Spannungen durch eine additive Spannungsschaltung umfasst, die eine photovoltaische Energiespeicherinduktivität mit Welligkeitsstrom im Bereich von nicht mehr als etwa einem halben Tastgrad umfasst.

3. Verfahren zur hocheffizienten Abgabe von Solarenergieleistung nach Anspruch 2, wobei der Schritt des Kombinierens (9), in Serienleistung mit niedriger Speicherinduktivität, der Basisphasen-DC-Leistungsabgabe (71) mit der phasenveränderten DC-Leistungsabgabe (72) den Schritt des Addierens der Spannungen über eine photovoltaische Energiespeicherinduktivität mit Welligkeitsstrom im Bereich von nicht mehr als etwa einem Viertel des Tastgrads umfasst.

4. Verfahren zur hocheffizienten Abgabe von Solarenergieleistung nach Anspruch 1, wobei der Schritt der synchronen Phasensteuerung (11) den Schritt der synchronen Tastgradsteuerung umfasst.

5. Verfahren zur hocheffizienten Abgabe von Solarenergieleistung nach Anspruch 4, wobei der Schritt der synchronen Tastgradsteuerung den Schritt der gemeinsamen Tastgradsteuerung umfasst.

6. Verfahren zur hocheffizienten Abgabe von Solarenergieleistung nach Anspruch 4, des Weiteren umfassend die Schritte:
- Herstellen des wandlungskombinierten photovoltaischen DC-Ausgangs (10) als einen umgewandelten photovoltaischen DC-Eingang in einen photovoltaischen Wechselrichter; und
- Invertieren des umgewandelten photovoltaischen DC-Eingangs in einen photovoltaischen AC-Leistungsausgang.

7. Verfahren zur hocheffizienten Abgabe von Solarenergieleistung nach Anspruch 1, wobei der Schritt der synchronen Phasensteuerung (11) den Schritt der gemeinsamen Taktsignalsteuerung umfasst.

8. Verfahren zur hocheffizienten Abgabe von Solarenergieleistung nach Anspruch 1, wobei der Schritt der synchronen Phasensteuerung (11) den Schritt der entgegengesetzten Phasensteuerung umfasst.

9. Verfahren zur hocheffizienten Abgabe von Solarenergieleistung nach Anspruch 1, wobei der Schritt des Steuerns des photovoltaischen Grenzflächenausgangs der Basisphase des Weiteren den Schritt des Steuerns der Temperaturgrenze umfasst.

10. Verfahren zur hocheffizienten Abgabe von Solarenergieleistung nach Anspruch 1, wobei die Induktivität zwischen dem ersten und dem zweiten Induktivitätsabgriff (57) eine Induktivität (17) mit niedriger photovoltaischer Energiespeicherung umfasst.

11. Verfahren zur hocheffizienten Abgabe von Solarenergieleistung nach Anspruch 1, wobei der Schritt des Kombinierens, in Serienleistung mit niedriger Speicherinduktivität, der Basisphasen-DC-Leistungsabgabe (6) mit der phasenveränderten DC-Leistungsabgabe (8) den Schritt des Einrichtens einer Anordnung mit doppelter Maximalspannung umfasst.

12. Hocheffizientes Solarenergie-Leistungssystem umfassend:
- eine erste photovoltaische Leistungsquelle (5);
- einen Basisphasen-DC/DC-Photovoltaikwandler (6), der mit seinem Eingangsanschluss mit der ersten photovoltaischen Leistungsquelle (5) verbunden ist und der eine Basisphasen-DC-Leistungsabgabe (71) herstellt, wobei der Basisphasen-DC/DC-Photovoltaikwandler (6) eine erste magnetisch gekoppelte Induktivität (56) mit Abgriff mit einer ersten Induktivitätsabgriff (57) umfasst, wobei beide Eingänge der ersten magnetisch gekoppelten Induktivität (56) mit Abgriff mit beiden jeweiligen Mittelpunkten (58) des Basisphasen-DC/DC-Photovoltaikwandlers (6) verbunden sind;
- eine zweite photovoltaische Stromquelle (7);
- einen phasenveränderten DC/DC-Photovoltaikwandler (8), der mit seinen Eingangsanschlüssen mit der zweiten photovoltaischen Leistungsquelle (7) verbunden ist und der eine DC-Leistungsabgabe (72) mit veränderter Phase erzeugt, wobei der phasenveränderte DC/DC-Photovoltaikwandler (8) eine zweite magnetisch gekoppelte Induktivität (56) mit Abgriff mit einem zweiten Induktivitätsabgriff (57) umfasst, wobei beide Eingänge der zweiten magnetisch gekoppelten Induktivität (56) mit Abgriff mit beiden jeweiligen Mittelpunkten (58) des phasenveränderten DC/DC-Photovoltaikwandlers (8) verbunden sind;
- eine synchrone Phasensteuerungsschaltung (11), auf die die Basisphasen-DC-Leistungsabgabe (71) und die phasenveränderte DC-Leistungsabgabe (72) schaltzeitabhängig sind;
- additive Kombinationsschaltung (9) mit niedriger Speicherenergieinduktivität in Serienleistung, die die Basisphasen-DC-Leistungsabgabe (71) und die phasenveränderte DC-Leistungsabgabe (72) verbindet und eine niederinduktive Speicher-Serienkombinations-Induktivität (17) umfasst, die zwischen die Induktivitätsabgriffe (57) geschaltet ist, um eine Ausgangsspannung der Basisphasen-DC-Leistungsabgabe mit einer Ausgangsspannung der phasenveränderten DC-Leistungsabgabe zu addieren, um einen wandlungskombinierten photovoltaischen DC-Ausgang (10) bereitzustellen; und
- eine photovoltaische Grenzflächenausgangssteuerung (63), auf die die Wandler zumindest zu einigen Betätigungszeiten ansprechen.

13. Hocheffizientes Solarenergie-Leistungssystem nach Anspruch 12, wobei die niederinduktive Speicher-Serienkombinations-Induktivität (17) eine photovoltaische Energiespeicherinduktivität mit Welligkeitsstrom im Bereich von nicht mehr als etwa einem halben Tastgrad umfasst.

14. Hocheffizientes Solarenergie-Leistungssystem nach Anspruch 12, wobei die niederinduktive Speicher-Serienkombinations-Induktivität (17) eine photovoltaische Energiespeicherinduktivität mit Welligkeitsstrom im Bereich von nicht mehr als etwa einem Viertel Tastgrad umfasst.

15. Hocheffizientes Solarenergie-Leistungssystem nach Anspruch 12, wobei die Synchronphasen-Steuerschaltung (11) eine gemeinsame Tastgradsteuerung umfasst, auf die der Basisphasen-DC/DC-Photovoltaikwandler und der phasenveränderte DC/DC-Photovoltaikwandler jeweils ansprechen.

16. Hocheffizientes Solarenergie-Leistungssystem nach Anspruch 12, wobei die Synchronphasen-Steuerschaltung (11) entgegengesetzte Phasensteuerschaltung umfasst.

17. Hocheffizientes Solarenergie-Leistungssystem nach Anspruch 16, wobei der Basisphasen-DC/DC-Photovoltaikwandler und der phasenveränderte DC/DC-Photovoltaikwandler jeweils einen Buck-Schaltkreis umfassen.

18. Hocheffizientes Solarenergie-Leistungssystem nach Anspruch 12, wobei die photovoltaische Grenzflächenausgangssteuerung (63) eine photovoltaische Basisphasen-Grenzflächenausgangssteuerung umfasst, auf den der Basisphasen-DC/DC-Photovoltaikwandler zumindest zu einigen Betätigungszeiten anspricht, und eine photovoltaische Grenzflächenausgangssteuerung mit geänderter Phase, auf den der DC/DC-Photovoltaikwandler mit geänderter Phase zumindest zu einigen Betätigungszeiten anspricht.

19. Hocheffizientes Solarenergie-Leistungssystem nach Anspruch 12, wobei der wandlungskombinierte photovoltaische Ausgang (10) an dem Punkt maximaler Leistung (75) vorgesehen ist, wenn der Punkt maximaler Leistung nicht durch die photovoltaische Grenzflächenausgangssteuerung (63) übersteuert wird.

20. Hocheffizientes Solarenergie-Leistungssystem nach Anspruch 19, wobei die photovoltaische Grenzflächenausgangssteuerung (63) für eine maximale Spannung (73), die den Punkt maximaler Leistung übersteuert, oder für eine maximale Stromstärke (74) steuert, die den Punkt maximaler Leistung zumindest zu einigen Betätigungszeiten übersteuert.

21. Hocheffizientes Solarenergie-Leistungssystem nach Anspruch 19, wobei die photovoltaische Grenzflächenausgangssteuerung (63) für eine Temperaturbegrenzung steuert.

## Revendications

1. Procédé de fourniture d'énergie solaire à haut rendement comprenant les étapes ci-dessous consistant à :
- accepter une première puissance provenant d'une première source d'énergie photovoltaïque (5) par le biais d'un port d'entrée de courant continu, DC, d'un convertisseur continu-continu, DC-DC, photovoltaïque de phase de base (6) ;
- mettre en œuvre une conversion continu-continu, DC-DC, de phase de base (6) de ladite première puissance (5), en utilisant une première bobine d'induction à couplage magnétique à prise (56) avec une première prise de bobine d'induction (57), en vue de fournir en sortie une fourniture de puissance en courant continu de phase de base (71) connectée à ladite première prise de bobine d'induction (57), dans lequel les deux entrées de ladite première bobine d'induction à couplage magnétique à prise (56) sont connectées aux deux points médians respectifs (58) dudit convertisseur continu-continu photovoltaïque de phase de base (6) ;
- accepter une seconde puissance provenant d'une seconde source d'énergie photovoltaïque (7) par le biais d'un port d'entrée de courant continu d'un convertisseur continu-continu photovoltaïque à phase modifiée (8) ;
- mettre en œuvre une conversion continu-continu à phase modifiée (8) de ladite seconde puissance en utilisant une seconde bobine d'induction à couplage magnétique à prise (56) avec une seconde prise de bobine d'induction (57) en vue de fournir en sortie une fourniture de puissance en courant continu à phase modifiée (72) connectée à ladite seconde prise de bobine d'induction (57), dans lequel les deux entrées de ladite seconde bobine d'induction à couplage magnétique à prise (56) sont connectées aux deux points médians respectifs (58) dudit convertisseur continu-continu photovoltaïque à phase modifiée (8) ;
- mettre en œuvre une commande de phase synchrone (11) de ladite étape de conversion continu-continu de phase de base de ladite première puissance avec ladite étape de conversion continu-continu à phase modifiée de ladite seconde puissance ;
- mettre en œuvre une combinaison de puissance en série d'inductance à faible stockage (9) de ladite fourniture de puissance en courant continu de phase de base (71) avec ladite fourniture de puissance en courant continu à phase modifiée (72) par l'intermédiaire d'un montage de circuits à tension additive qui inclut une bobine d'induction à combinaison en série à faible inductance de stockage (17) connectée entre lesdites première et seconde prises de bobine d'induction en vue d'ajouter une tension de sortie de ladite fourniture de puissance en courant continu de phase de base à une tension de sortie de ladite fourniture de puissance en courant continu à phase modifiée avec un condensateur de sortie à faible stockage d'énergie (18) en vue de fournir une sortie de courant continu photovoltaïque combinée de conversion (10) au niveau d'un point de puissance maximale (75) ; et
- mettre en œuvre une commande de sortie limite photovoltaïque (63) de ladite étape de conversion continu-continu de phase de base de ladite première puissance et de ladite étape de conversion continu-continu à phase modifiée de ladite seconde puissance pour une tension maximale (73) qui dépasse ledit point de puissance maximale (75), ou pour un courant maximal (74) qui dépasse ledit point de puissance maximale, au cours d'au moins certains temps de fonctionnement.

2. Procédé de fourniture d'énergie solaire à haut rendement selon la revendication 1, dans lequel ladite étape de mise en œuvre d'une combinaison de puissance en série d'inductance à faible stockage (9) de ladite fourniture de puissance en courant continu de phase de base (71) avec ladite fourniture de puissance en courant continu à phase modifiée (72) comprend l'étape consistant à ajouter lesdites tensions par le biais d'un montage de circuits à tension additive qui inclut une bobine d'induction de stockage d'énergie photovoltaïque à courant ondulé dont la plage de fonctionnement ne dépasse pas environ un demi-cycle de service.

3. Procédé de fourniture d'énergie solaire à haut rendement selon la revendication 2, dans lequel ladite étape de mise en œuvre d'une combinaison de puissance en série d'inductance à faible stockage (9) de ladite fourniture de puissance en courant continu de phase de base (71) avec ladite fourniture de puissance en courant continu à phase modifiée (72) comprend l'étape consistant à ajouter lesdites tensions par le biais d'une bobine d'induction de stockage d'énergie photovoltaïque à courant ondulé dont la plage de fonctionnement ne dépasse pas environ un quart de cycle de service.

4. Procédé de fourniture d'énergie solaire à haut rendement selon la revendication 1, dans lequel ladite étape de commande de phase synchrone (11) comprend l'étape de commande de cycle de service synchrone.

5. Procédé de fourniture d'énergie solaire à haut rendement selon la revendication 4, dans lequel ladite étape de commande de cycle de service synchrone comprend l'étape de commande de cycle de service commun.

6. Procédé de fourniture d'énergie solaire à haut rendement selon la revendication 4, comprenant en outre les étapes ci-dessous consistant à :
- établir ladite sortie de courant continu photovoltaïque combinée de conversion (10) en tant qu'une entrée photovoltaïque à courant continu converti au niveau d'un onduleur de courant continu-courant alternatif, DC-AC, photovoltaïque ; et
- inverser ladite entrée photovoltaïque à courant continu converti en une sortie de puissance en courant alternatif, AC, photovoltaïque.

7. Procédé de fourniture d'énergie solaire à haut rendement selon la revendication 1, dans lequel ladite étape de commande de phase synchrone (11) comprend l'étape de commande de signal de temporisation commun.

8. Procédé de fourniture d'énergie solaire à haut rendement selon la revendication 1, dans lequel ladite étape de commande de phase synchrone (11) comprend l'étape de commande de phase opposée.

9. Procédé de fourniture d'énergie solaire à haut rendement selon la revendication 1, dans lequel ladite étape de commande de sortie limite photovoltaïque de ladite phase de base comprend en outre l'étape de commande de limite de température.

10. Procédé de fourniture d'énergie solaire à haut rendement selon la revendication 1, dans lequel ladite bobine d'induction entre lesdites première et seconde prises de bobine d'induction (57) comprend une bobine d'induction à faible stockage d'énergie photovoltaïque (17).

11. Procédé de fourniture d'énergie solaire à haut rendement selon la revendication 1, dans lequel ladite étape de combinaison de puissance en série d'inductance à faible stockage de ladite fourniture de puissance en courant continu de phase de base (6) avec ladite fourniture de puissance en courant continu à phase modifiée (8) comprend l'étape d'établissement d'un agencement de tension maximale double.

12. Système d'alimentation en énergie solaire à haut rendement, comprenant :
- une première source d'énergie photovoltaïque (5) ;
- un convertisseur continu-continu photovoltaïque de phase de base (6) connecté par son port d'entrée à ladite première source d'énergie photovoltaïque (5) et qui établit une fourniture de puissance en courant continu de phase de base (71), ledit convertisseur continu-continu photovoltaïque de phase de base (6) comprenant une première bobine d'induction à couplage magnétique à prise (56) avec une première prise de bobine d'induction (57), dans lequel les deux entrées de ladite première bobine d'induction à couplage magnétique à prise (56) sont connectées aux deux points médians respectifs (58) dudit convertisseur continu-continu photovoltaïque de phase de base (6) ;
- une seconde source d'énergie photovoltaïque (7) ;
- un convertisseur continu-continu photovoltaïque à phase modifiée (8) connecté par ses ports d'entrée à ladite seconde source d'énergie photovoltaïque (7) et qui établit une fourniture de puissance en courant continu à phase modifiée (72), ledit convertisseur continu-continu photovoltaïque à phase modifiée (8) comprenant une seconde bobine d'induction à couplage magnétique à prise (56) avec une seconde prise de bobine d'induction (57), dans lequel les deux entrées de ladite seconde bobine d'induction à couplage magnétique à prise (56) sont connectées aux deux points médians respectifs (58) dudit convertisseur continu-continu photovoltaïque à phase modifiée (8) ;
- un montage de circuits de commande de phase synchrone (11) auquel ladite fourniture de puissance en courant continu de phase de base (71) et ladite fourniture de puissance en courant continu à phase modifiée (72) répondent à une temporisation de commutation ;
- un montage de circuits de combinaison additive de puissance en série d'inductance à faible stockage d'énergie (9) connectant ladite fourniture de puissance en courant continu de phase de base (71) et ladite fourniture de puissance en courant continu à phase modifiée (72), et comprenant une bobine d'induction à combinaison en série à faible inductance de stockage (17) connectée entre lesdites prises de bobine d'induction (57) pour ajouter une tension de sortie de ladite fourniture de puissance en courant continu de phase de base à une tension de sortie de ladite fourniture de puissance en courant continu à phase modifiée en vue de fournir une sortie de courant continu photovoltaïque combinée de conversion (10) ; et
- un contrôleur de sortie limite photovoltaïque (63) auquel lesdits convertisseurs répondent au cours d'au moins certains temps de fonctionnement.

13. Système d'alimentation en énergie solaire à haut rendement selon la revendication 12, dans lequel ladite bobine d'induction à combinaison en série à faible inductance de stockage (17) comprend une bobine d'induction de stockage d'énergie photovoltaïque à courant ondulé dont la plage de fonctionnement ne dépasse pas environ un demi-cycle de service.

14. Système d'alimentation en énergie solaire à haut rendement selon la revendication 12, dans lequel ladite bobine d'induction à combinaison en série à faible inductance de stockage (17) comprend une bobine d'induction de stockage d'énergie photovoltaïque à courant ondulé dont la plage de fonctionnement ne dépasse pas environ un quart de cycle.

15. Système d'alimentation en énergie solaire à haut rendement selon la revendication 12, dans lequel ledit montage de circuits de commande de phase synchrone (11) comprend un contrôleur de cycle de service commun auquel répondent mutuellement ledit convertisseur continu-continu photovoltaïque de phase de base et ledit convertisseur continu-continu photovoltaïque à phase modifiée.

16. Système d'alimentation en énergie solaire à haut rendement selon la revendication 12, dans lequel ledit montage de circuits de commande de phase synchrone (11) comprend un montage de circuits de commande de phase opposée.

17. Système d'alimentation en énergie solaire à haut rendement selon la revendication 16, dans lequel ledit convertisseur continu-continu photovoltaïque de phase de base et ledit convertisseur continu-continu photovoltaïque à phase modifiée comprennent chacun un montage de circuits dévolteur.

18. Système d'alimentation en énergie solaire à haut rendement selon la revendication 12, dans lequel ledit contrôleur de sortie limite photovoltaïque (63) comprend un contrôleur de sortie limite photovoltaïque de phase de base auquel ledit convertisseur continu-continu photovoltaïque de phase de base répond au cours d'au moins certains temps de fonctionnement, et un contrôleur de sortie limite photovoltaïque à phase modifiée auquel ledit convertisseur continu-continu photovoltaïque à phase modifiée répond au cours d'au moins certains temps de fonctionnement.

19. Système d'alimentation en énergie solaire à haut rendement selon la revendication 12, dans lequel ladite sortie de courant continu photovoltaïque combinée de conversion (10) est fournie au niveau d'un point de puissance maximale (75) lorsque ledit point de puissance maximale n'est pas dépassé par ledit contrôleur de sortie limite photovoltaïque (63).

20. Système d'alimentation en énergie solaire à haut rendement selon la revendication 19, dans lequel ledit contrôleur de sortie limite photovoltaïque (63) commande une tension maximale (73) qui dépasse ledit point de puissance maximale ou un courant maximal (74) qui dépasse ledit point de puissance maximale au cours d'au moins certains temps de fonctionnement.

21. Système d'alimentation en énergie solaire à haut rendement selon la revendication 19, dans lequel ledit contrôleur de sortie limite photovoltaïque (63) commande une limite de température.
